(19) **Europäisches Patentamt / European Patent Office / Office européen des brevets**

(11) **EP 1 797 654 B1**

(12) # EUROPÄISCHE PATENTSCHRIFT

(45) Veröffentlichungstag und Bekanntmachung des Hinweises auf die Patenterteilung:
**22.04.2009 Patentblatt 2009/17**

(21) Anmeldenummer: **05792102.5**

(22) Anmeldetag: **20.09.2005**

(51) Int Cl.:
***H04B 10/135*** (2006.01)    ***H04B 10/155*** (2006.01)
***H04B 10/158*** (2006.01)

(86) Internationale Anmeldenummer:
**PCT/EP2005/054685**

(87) Internationale Veröffentlichungsnummer:
**WO 2006/034975 (06.04.2006 Gazette 2006/14)**

(54) **VERFAHREN UND ANORDNUNG ZUR OPTISCHEN ÜBERTRAGUNG VON DATENSIGNALEN MITTELS DIFFERENTIELLER PHASENMODULATION IN EINEM POLARISATIONS-MULTIPLEXVERFAHREN**

METHOD AND ARRANGEMENT FOR THE OPTICAL TRANSMISSION OF DATA SIGNALS BY MEANS OF DIFFERENTIAL PHASE MODULATION IN A POLARISATION MULTIPLEX METHOD

PROCEDE ET DISPOSITIF DE TRANSMISSION OPTIQUE DE SIGNAUX DE DONNEES PAR MODULATION DE PHASE DIFFERENTIELLE DANS UN PROCEDE DE MULTIPLEXAGE DE POLARISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.09.2004 DE 102004047028**

(43) Veröffentlichungstag der Anmeldung:
**20.06.2007 Patentblatt 2007/25**

(73) Patentinhaber: **Nokia Siemens Networks GmbH & Co. KG**
**81541 München (DE)**

(72) Erfinder:
• **CALABRO, Stefano**
**81375 München (DE)**

• **SCHMIDT, Ernst-Dieter**
**83620 Feldkirchen-Westerham (DE)**

(56) Entgegenhaltungen:
**DE-A1- 10 243 141**

• **SALAMON A ET AL: "Secure optical communications utilizing PSK modulation, polarization multiplexing and coherent digital homodyne detection with wavelength and polarization agility" 2003 IEEE MILITARY COMMUNICATIONS CONFERENCE. MILCOM 2003. BOSTON, MA, OCT. 13 - 16, 2003, IEEE MILITARY COMMUNICATIONS CONFERENCE, NEW YORK, NY : IEEE, US, Bd. VOL. 2 OF 2, 13. Oktober 2003 (2003-10-13), Seiten 274-282, XP010698253 ISBN: 0-7803-8140-8**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren nach dem Oberbegriff des Patentanspruchs 1. Außerdem betrifft die Erfindung hierzu geeignete Anordnungen, die in den Ansprüchen 3 und 4 beschrieben sind.

Als Polarisations-Multiplexverfahren (POLMUX) wird ein für die Übertragung von optischen Signalen geeignetes Verfahren bezeichnet, bei dem zwei unterschiedliche Datensignale in zueinander orthogonalen Polarisationsebenen übertragen werden. Die heute übliche Technik verwendet einstellbare Polarisations-Kontroller mit nachgeschalteten Polarisationsfiltern, um die Signale beider Polarisationsebenen optimal trennen zu können. Ein solches Verfahren ist jedoch recht kompliziert und benötigt empfangsseitig einen größeren Hardwareaufwand.

In der Patentanmeldung DE 102 43 141 A1 wird ein Verfahren zur Übertragung von zwei vierstufig phasenmodulierten DOPSK-Signalen im Polarisationsmultiplexverfahren beschrieben. Die modulierten DQPSK-Signale werden empfangsseitig mittels eines Polarisationsteilers getrennt. Nach einer Kompensation der DQPSK-Signale erfolgt die Umsetzung in Binärsignale. Zur Kompensation wird ein mehrdimensionales Filter verwendet.

Aviv Salamon et al. beschreiben in dem Artikel "Secure optical communicationutilizing PSK modulation, wavelength and polarisation agility" 2003 IEEE MILITARY COMMUNICATIONS CONFERENCE, MILCOM 2003, BOSTEN, MA, OCT: 13-16 ein dem vorstehenden Verfahren im wesentlichen entsprechendes System, beschränken sich hierbei aber auf QPSK (vierstufige Phasenmodulation.

Im Artikel "Conventional DPSK Versus Symmetrical DPSK: Comparision of Dispersion Tolerances" von Jin Wang in IEEE PHotonics Technology Letters; Vol. 16, NO. 6, June 2004, pages 1585 - 1587 wird ein Vergleich zwischen konventioneller DPSK mit Phasenzuständen 0 und $\pi$ und symmetrischer DPSK mit den Phasenzuständen $\pi/2$ und $-\pi/2$ zwischen aufeinanderfolgenden Bits beschrieben.

Aufgabe der Erfindung ist es daher, ein Polarisations-Multiplexverfahren anzugeben, dass sowohl gute Übertragungseigenschaften aufweist als auch mit geringerem Aufwand realisierbar ist.

Ein solches Verfahren ist im Anspruch 1 angegeben. In den unabhängigen Ansprüchen 3 und 4 werden zur Durchführung des Verfahrens besonders vorteilhafte Anordnungen für die Sendeseite und für die Empfangsseite beschrieben.

Vorteilhafte Weiterbildungen der Erfindung sind in den abhängigen Ansprüchen angegeben.

Der Erfindung liegt die Idee der Übertragung zweier Datensignale in einem Kanal (mit einer Wellenlänge) unter Verwendung von zwei zueinander orthogonalen Modulationen zugrunde. Dies erspart die empfangsseitige Trennung der polarisierten Signale oder aufwendige Kompensationseinrichtungen.

Besonders vorteilhaft zur Erzielung einer guten Übertragungsqualität ist die Verwendung von Differenzphasenmodulation, die gegenüber der bisher meist verwendeten Amplitudenmodulation eine wesentlich verbesserte Übertragungsgüte aufweist. Die Differenzphasenmodulation, DPSK - Differential Phase Shift Keying, ist insbesondere gegen Änderungen von Eigenschaften der Übertragungsstrecke und des Übertragungs-Equipments unempfindlich, da bei der Demodulation jeweils aufeinanderfolgende Modulationsabschnitte (Bits) miteinander verglichen werden. Bei DPSK können Demodulatoren besonders einfach realisiert werden, ohne dass diese Hilfsfrequenzen zur Demodulation erfordern.

Auch bei Phasenmodulation können zwei Datensignale zueinander orthogonal moduliert werden. Hier sind aber Hilfsfrequenzen zur Demodulation erforderlich.

Aus Stabilitätsgründen ist es vorteilhaft, wenn sowohl im Transmitter die Modulatoren als auch im Empfänger die Demodulatoren weitestgehend symmetrisch aufgebaut sind; beispielsweise werden empfangsseitig sogenannte "balanced" Demodulatoren verwendet, die außerdem eine bessere Performance, insbesondere ein besseres Signal-Rauschen-Verhältnis, aufweisen.

Die Erfindung wird nun anhand von Ausführungsbeispielen näher erläutert.

Es zeigen

Figur 1 ein Prinzipaschaltbild einer Übertragungseinrichtung,
Figur 2, ein Diagramm zur Differenz-Phasen-Modulation und ein Diagramm zur $\pi/2$-Differenz-Phasen-Mmodulation,
Figur 3, das Prinzipschaltbild eines $\pi/2$-Phasenmodulators/Differenzphasenmodulators,
Figur 4, ein Prinzipschaltbild eines Parallel-$\pi/2$-Phasenmodulators,
Figur 5, ein Prinzipschaltbild eines Differenz-Phasen-Demodulators,
Figur 6 ein Prinzipschaltbilds eines $\pi/2$-Differenz-Phasen-Demodulators.

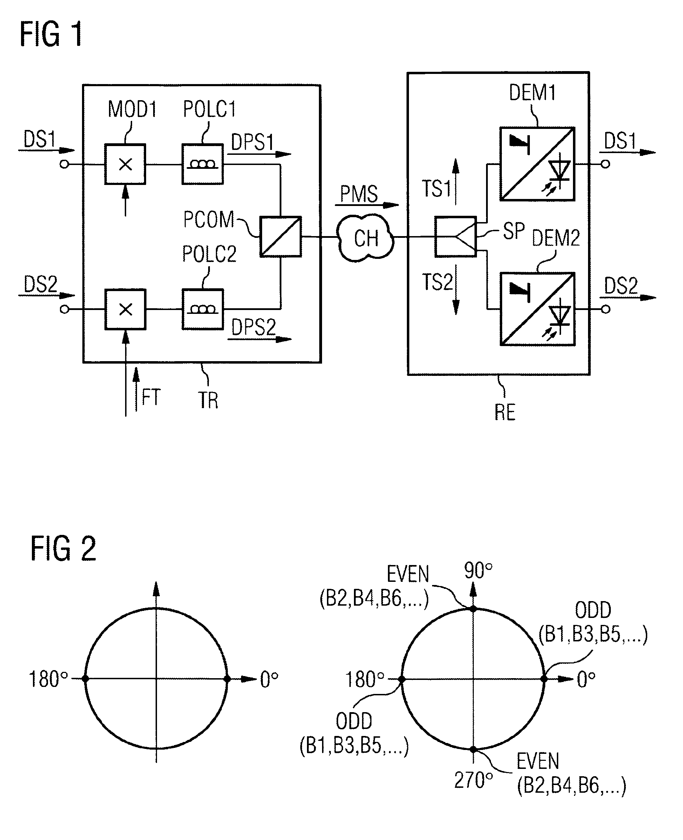

In Figur 1 ist das komplette auf wesentliche Elemente reduzierte Übertragungssystem mit einer Sendeeinrichtung TR, einem Übertragungskanal CH und einer Empfangseinrichtung RE dargestellt.

Zwei Datensignale DS1 und DS2 sollen jeweils in einem Kanal eines POLMUX-Systems (Polarisations-Multiplexsystem) mit zwei zueinander orthogonalen Polarisationen P0˚ und P90˚ übertragen werden. Ein beispielsweise von einem Laser erzeugtes optisches Trägersignal FT wird durch das erste Datensignal DS1 in herkömmlicher Weise in einem ersten Modulator MOD1 mittels zweistufiger Differenzphasen-Modulation, als DBPSK (B - binary) bezeichnet, in ein erstes Übertragungssignal DPS1 umgesetzt.

Dasselbe Trägersignal FT wird einem zweiten Modulator MOD2 zugeführt und mit dem zweiten Datensignal DS2 DBPSK moduliert. Es wird jedoch eine zur ersten Modulation "orthogonale Modulation" verwendet, die hier als binäre $\pi/2$-Differenz-Phasenmodulation, kurz $\pi/2$-DBPSK, bezeichnet wird (bei Phasenmodulation als $\pi/2$-Phasenmodulation). Das modulierte "$\pi/2$-Übertragungssignal" wird orthogonal zum anderen POLMUX-Signal polarisiert und als zweites Übertragungssignal DPS2 mit dem ersten Übertragungssignal DPS1 zu einem Polarisations-Multiplexsignal PMS (POLMUX-Signal) zusammengefasst und über den POLMUX-Kanal CH übertragen.

Empfangsseitig ist keine Polarisationseinstellung und Aufteilung in zwei polarisierte Signale DPS1 uns DPS2 erforderlich, da sich die orthogonal modulierten Übertragungssignale bei der Demodulation nicht beeinflussen. Das empfangene POLMUX-Signal wird in zwei POLMUX-Teilsignale (vorzugsweise gleicher Leistung) TS1 und TS2 aufgespalten, die direkt einem Demodulator DEM1 bzw.

DEM2 zugeführt werden. Der erste Demodulator DEM1 ist für herkömmliche Differenz-Phasen-Modulation (oder Phasenmodulation) ausgebildet und gewinnt aus dem ersten POLMUX-Teilsignal TS1 das erste Datensignal DS1 wieder. Das zweite Übertragungssignal stört aufgrund seiner orthogonalen Modulation hierbei nicht.

Aus dem zweiten POLMUX-Teilsignal TS2 wird das zweite Datensignal DS2 wiedergewonnen. Der zweite Demodulator DEM2 muss deshalb die spezielle Demodulation des zweiten Übertragungssignals DPS2 berücksichtigen, um dieses demodulieren zu können, und zum anderen die Anteile des ersten Übertragungssignals DPS1 so behandeln, dass diese die Modulation des zweiten Übertragungssignals DPS2 nicht beeinflussen.

Anhand von Figur 2 soll die Übertragung mittels orthogonaler Differenzphasen- oder Phasenmodulation zunächst allgemein erläutert werden. Das linke Bild symbolisiert die Übertragung von binären Daten mittels der bekannten Phasen- oder Differenzphasenmodulation. Die Information liegt bei binärer Phasenmodulation in zwei verschiedenen Phasenzuständen des Trägersignals und bei Differenz-Phasen-Modulation in der Phasendifferenz aufeinanderfolgender Modulationsabschnitte; die zwei Phasenzustände werden beispielsweise durch die Phase 0˚ und die Phase 180˚ symbolisiert. Bei Differenzphasenmodulation ist die Bitfolge des Datensignals, also die Folge der binären Zustände 0 und 1, maßgebend, denen Phasenunterschiede aufeinanderfolgender Modulationsabschnitte zugeordnet werden. So kann beispielsweise eine logische 0 durch Nichtänderung der Phase und eine logische 1 durch Änderung der Phase um 180˚ übertragen werden.

Die Modulation im unteren Signalzweig der Sendeeinrichtung TR ist komplizierter. Sie soll anhand der $\pi/2$-DBPSK erläutert werden. Es wird davon ausgegangen, dass ein erster Modulationsabschnitt (odd - ungerade) B1 die Phase 0˚ aufweist. Das nächste (even - geradzahlige) Bit sei wiederum eine logische 0, was bei üblicher DBPSK zu einer Beibehaltung der Phase während des nächsten Modulationsabschnittes B2 führen würde. Bei der verwendeten $\pi/2$-DBPSK wird jedoch die Phase (beispielsweise linksdrehend) um 90˚ geändert und der zweite Modulationsabschnitt B2 mit einer Phase von 90˚ ausgesendet. Beim nächsten Modulationsabschnitt wird die Phase zunächst weiter um 90˚ linksdrehend geändert. Wird dann wieder eine logische 0 übertragen, bleibt es bei dieser Phase von 180˚, wird dagegen eine logische 1 übertragen, dann erfolgt eine zusätzliche Phasenänderung von 180˚; es wird dann ein Modulationsabschnitt B3 mit einer Phasendifferenz von 360˚ = 0˚ übertragen usw. Alle ODD-Modulationsabschnitte B1, B3, B5, ... weisen daher Phasen von 0˚ oder 180˚ auf und alle EVEN-Modulationsabschnitte B2, B4, B4, ... weisen Phasen von 90˚ und 270˚ auf. Wie noch erläutert wird, hat aufgrund dieser Phasenunterschiede das zweite Übertragungssignal DPS2 auf die Demodulation des ersten Datensignals DS1 keinen Einfluss und umgekehrt.

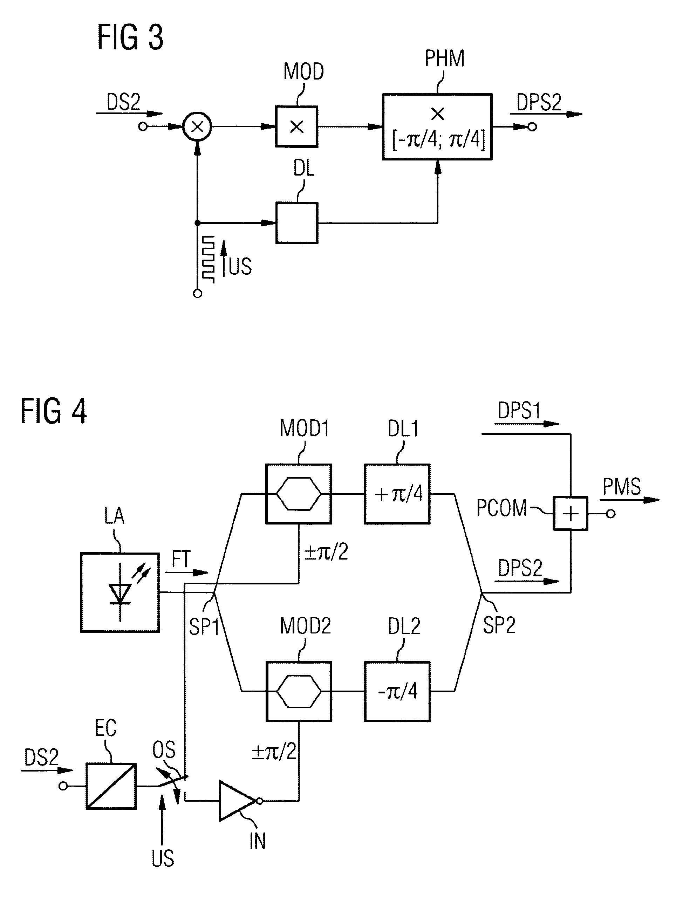

Zunächst soll jedoch der prinzipielle Aufbau eines $\pi/2$-DPSK Modulators anhand der Figur 3 erläutert werden. Das zweite Datensignal DS2 wird einem konventionellen Differenz-Phasenmodulator (oder Phasenmodulator) MOD zugeführt (wobei auf die Invertierung jeden zweiten Bits im Modulo-2-Addierer M2A später eingegangen wird), der es in ein übliches Differenz-Phasen-Signal umsetzt. Jedes zweite Bit bewirkt - gesteuert durch ein Umschaltsignal US - nach Durchlaufen eines Verzögerungsgliedes DL - in einem dem Modulator MOD nachgeschalteten Phasenmodulator PHM eine zusätzliche Phasenänderung um 90˚ ($-\pi/4$; $+\pi/4$ oder 0; $\pi/2$), so dass die ungeradzahligen Bits den Phasenzuständen 0˚ und 180˚ zugeordnet sind, die geradzahligen aber den Phasen 90˚ und 270˚. Die Modulatoren MOD und PHM können bei entsprechender Ansteuerung durch einen 4-Phasen-Modulator ersetzt werden.

Die bereits beschriebene Rotation der Phase um jeweils $\pi/2$ kann durch das Einstellen zweier unterschiedlicher Phasenänderungen (oder Verzögerungszeiten) und durch Invertieren jeden zweiten Bits des Datensignals erzielt werden, wie nachstehend erläutert wird.

Die Codierungsregel in allgemeiner Form, lautet

$$(1) \quad a_k = b_k a_{k-1} \exp\left( j\frac{\pi}{2} \right)$$

wobei $b_k \in \{-1; 1\}$ die Informationsbits sind und

$a_k \in \{1; \exp(j\pi/2); -1; \exp(-j\pi/2)\}$ die übertragenen Symbole zum $k$-th Übertragungsintervall sind.

Unter Einführung der Trägerfrequenz $f_0$, des übertragenen Signalimpulses p(t) und der Signalperiode $T$ ergibt sich für das übertragene Signal im k-ten Modulationsintervall

$$(2) \quad s_k(t) = \mathrm{Re}\{a_k\, p(t-kT)\exp(j2\pi f_0 t)\}.$$

durch entsprechende Änderung der Codierungsregel nach (1) ergibt sich

$$(3) \quad a_k = b_k a_{k-1}(-1)^k \exp\left[ j(2k+1)\frac{\pi}{2} \right] = \begin{cases} b_k a_{k-1}\exp\left( j\frac{\pi}{2} \right) & \text{if } k \text{ is even} \\ -b_k a_{k-1}\exp\left( -j\frac{\pi}{2} \right) & \text{if } k \text{ is odd} \end{cases}$$

durch Einführen von modifizierten Übertragungssymbolen $\tilde{a}_k \in \{-1;1\}$ als

$$(4) \quad \tilde{a}_k = b_k \tilde{a}_{k-1}(-1)^k$$

und modifizierter Signalimpulse

$$(5) \quad \tilde{p}_k(t) = \begin{cases} p(t)\exp\left( j\frac{\pi}{4} \right) & \text{if } k \text{ is even} \\ p(t)\exp\left( -j\frac{\pi}{4} \right) & \text{if } k \text{ is odd} \end{cases},$$

kann das übertragene Signal beschrieben werden als

$$(6) \quad s_k(t) = \mathrm{Re}\{\tilde{a}_k \tilde{p}_k(t-kT)\exp(j2\pi f_0 t)\}.$$

Erwartungsgemäß führt dies zu einem $\pi/2$-DPSK-Modulator, bei dem durch zwei verschiedene Einstellungen des Phasenmodulators statt einer andauernden Rotation in derselben Richtung dasselbe Ergebnis erzielt wird.

Figur 4 zeigt einen symmetrisch aufgebauten $\pi/2$-DBPSK-Modulator. Ein Laser LA erzeugt wieder das Trägersignal FT, das in einem Splitter SP1 auf einen oberen Signalzweig ZM1 und unteren Signalzweig ZM2 des $\pi/2$-DBPSK-Modulators aufgeteilt wird. Abwechselnd von dem Umschaltsignal US wird über den optischen Schalter OS der obere Modulator MOD1 oder der untere Modulator MOD2 von einem Vorcodierer EC aktiv geschaltet. Der Inverter IN übernimmt hier die Funktion des Modulo-2-Addierers MA2 aus Figur 3. Die Phasen der Modulationsabschnitte in jedem Signalzweig betragen 0˚ oder 180˚. Die Phasenänderung um 90˚ zwischen aufeinanderfolgenden Modulationsabschnitten wird hier durch zwei feste Phasen-Stellglieder (bzw. Laufzeitglieder) DL1 und DL2 erreicht, die jeweils im oberen und im unteren Signalzweig eingeschaltet sind. Die abwechselnd generierten Ausgangssignale werden durch einen zweiten Splitter (Combiner) SP2 zum zweiten Übertragungssignal DPS2 zusammengefasst. Die Darstellung ist symbolisch zu verstehen, die Verzögerung kann auch durch eine entsprechend ausgebildeten Modulators erzielt werden oder auch durch nur ein festes Phasen Stellglied DL1 mit einer $\pi/2$ entsprechenden Phasenverschiebung des Trägersignals in einem Signalzweig erreicht werden. Symmetrische Anordnungen haben im allgemeinen den Vorteil einer größeren Stabilität.

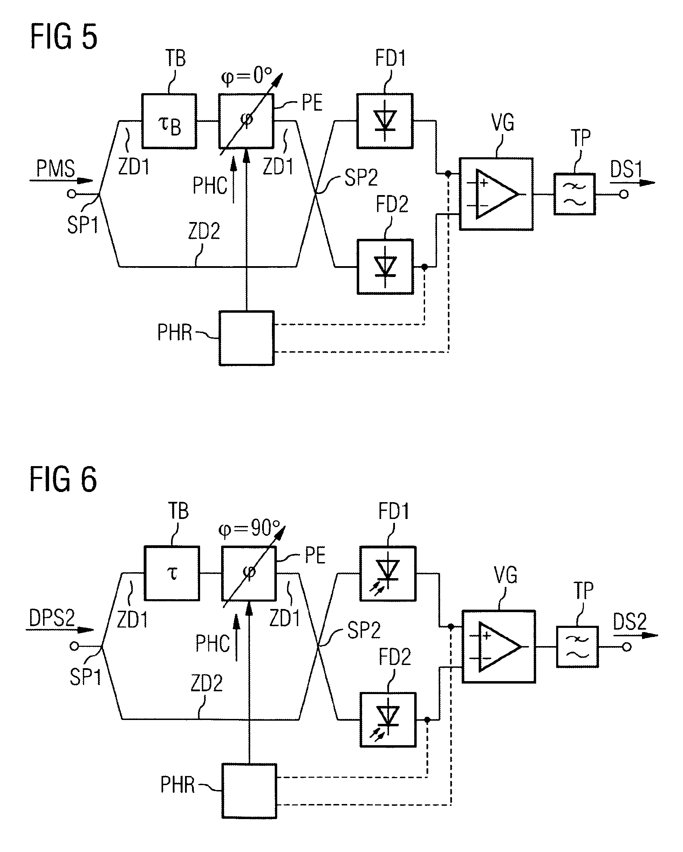

Figur 5 zeigt eine bekannte "balanced" Demodulatoranordnung für DBPSK. Diese entspricht einem Interferometer mit symmetrischen Ausgängen. Das empfangene Polarisations-Multiplexsignal PMS, das beide Übertragungssignale DPS1 und DPS2 beinhaltet, wird in einem ersten Splitter SP3 auf einen oberen Signalzweig ZD1 und einen unteren Signalzweig ZD2 aufgespaltet, wobei sich die Phasen dieser Teilsignale unterscheiden. Im oberen Signalzweig ist die Reihenschaltung eines Laufzeitgliedes TB mit einer Verzögerungzeit $\tau_B$ von einer Bitlänge und eines Phasen-Stellgliedes PE angeordnet. Die Teilsignale überlagern sich im ausgangsseitigen Splitter. Die Phasendifferenzen zwischen den überlagerten Teilsignalen an den Demodulatorausgängen betragen 0° und 180°, so dass sie sich bei einem bestimmten Phasenunterschied addieren und bei einem um 180° geänderten Phasenunterschied subtrahieren. Durch die balanced Struktur wird dadurch die obere Photodiode FD1 eine größere Spannung erzeugen, während die untere Photodiode FD2 eine kleinere (keine) Spannung erzeugt und im anderen Fall die obere Photodiode eine kleinere Spannung erzeugen, während die untere Photodiode eine größere Spannung abgibt. Durch eine nachfolgende Vergleichsschaltung VG (Differenzverstärker) und einem dieser vor- oder nachgeschalteten Tiefpass TP werden diese "analogen" Signale in binäre Datensignale rückumgesetzt. Der orthogonale Signalanteil des zweiten Übertragungssignals DPS2 erzeugt bei 90° Phasenverschiebung gleichgroße Spannungen in beiden Photodioden und liefert somit keinen Beitrag zum demodulierten Signal.

Zur optimalen Demodulation ist eine genaue Einstellung der Phase in beiden Signalzweigen ZD1, ZD2 des Demodulators erforderlich, die hier durch das Phasen-Stellglied PE und ein in einer Phasen-Regeleinheit PHR gewonnenes Phasenkontrollsignal PHC erfolgt. Die Darstellung ist symbolisch zu verstehen, Laufzeitglied und Phasen-Stellglied können beliebig realisiert werden.

Figur 6 zeigt ein Prinzipschaltbild des π/2-DBPSK-Demodulators, der sich von dem in Figur 5 dargestellten Demodulator allein dadurch unterscheidet, dass das Phasen-Stellglied PE2 eine Phasenverschiebung von 90° bewirkt, die die senderseitige Phasenverstellung des Übertragungssignals DPS2 um π/2 kompensiert, so dass das zweite Übertragungssignal an den Ausgängen des ausgangsseitigen Splitters SP4 als Überlagerung eines üblichen differenz-phasenmodulierten Signals erscheint. Es sollte wieder eine Phasen-Steuereinheit PHR vorhanden sein, um exakte Phasenbeziehungen zu erhalten.

Prinzipiell kann die zusätzliche Phasendrehung auch in einem dem Modulator entsprechenden Demodulator rückgängig gemacht werden, um anschließend die Demodulation in einem herkömmlichen DBPSK-Demodulator durchzuführen. Dies würde jedoch eine Bitsynchronisation und einen zusätzlichen Phasenmodulator mit entsprechender Steuerung erfordern. Die aufeinanderfolgenden Modulationsabschnitte des ersten Übertragungssignal DPS1 werden durch das Phasen-Stellglied PE2 um 90 gegeneinander phasenverschoben und liefern somit keinen Beitrag zum demodulierten Signal.

Zu ergänzen ist noch, dass diese Art der Übertragung gegenüber einer üblichen quaternären Differenzphasenmodulation aufgrund der differentiellen Detektion einen verbesserten Rauschabstand aufweist und aufgrund des maximalen Phasenabstandes von 180° eine vergrößerte Toleranz gegenüber Phasenrauschen.

**Patentansprüche**

1. Verfahren zur optischen Übertragung von Datensignale (DS1, DS2) mittels differentieller binärer Phasenmodulation in einem Polarisation-Multiplexverfahrens,
bei dem sendeseitig ein optisches Trägersignal (TF) mit einem ersten Datensignal (DS1) binär differenzphasenmoduliert DBPSK wird und als erstes polarisiertes Übertragungssignal (DPS1) mit zwei um 180° unterschiedlichen Phasenzuständen und mit einer ersten Polarisation generiert wird,
das optisches Trägersignal (TF) mit einem zweiten Datensignal (DS2) DBPSK-moduliert und als zweites polarisiertes Übertragungssignal (DPS2) mit einer zum ersten Übertragungssignal (DPS1) orthogonalen Polarisation ausgesendet wird, dessen ungeradzahlige Modulationsabschnitte (B1, B3, B5, ... ) als zwei um 180° unterschiedliche Phasenzustände (0°; 180°) übertragen werden und dessen geradzahlige Modulationsabschnitte (B2, B2, B3, ...) ebenfalls als um 180° unterschiedliche Phasenzustände (90°; 270°) generiert werden, die aber gegenüber den ungeradzahligen Bits eine ±90° Phasenverschiebung aufweisen, dass die Übertragungssignale (DPS1, DPS2) zu einem Polarisations-Multiplex-Signal (PMS) zusammengefasst und übertragen werden,
empfangsseitig das Polarisations-Multiplex-Signal (PMS) durch einen optischen Splitter in ein erstes und ein zweites POLMUX-Teilsignal (TS1, TS2) aufgeteilt wird,
das erste POLMUX-Teilsignal (TS1) in einem DBPSK-Demodulator (DEM1) demoduliert wird, und
das zweite POLMUX-Teilsignal (TS2) in einem ein Phasenstellglied (PE; DL1, DL2) aufweisenden π/2-DBPSK-Demodulator (DEM2) demoduliert wird.

2. Verfahren nach Anspruch 1,
**dadurch gekennzeichnet,**
**dass** die Demodulation der POLMUX-Teilsignale (TS1, TS2) durch einen ersten DBPSK-Demodulator und einem π/2-DBPSK-Demodulator mit symmetrischen Ausgängen erfolgt.

3. Anordnung zur optischen Übertragung von Datensignalen (DS1, DS2) mittels binärer differentieller Phasenmodulation im Polarisation-Multiplexverfahrens,
bei der sendeseitig einem Phasenmodulator (MOD1) ein Trägersignal (FT) und erstes Datensignal (DS1) zugeführt werden, der ein erstes binär differenzphasenmoduliertes DBPSK Übertragungssignal (DPS1) mit zwei um 180˚ unterschiedlichen Phasenzuständen erzeugt,
einem zweiten Phasenmodulator (MOD2) das optische Trägersignal (FT) und ein zweites Datensignal (DS2) zugeführt werden, der ein zweites DBPSK-moduliertes Übertragungssignal (DPS2) erzeugt, mindestens ein Polarisationssteller (POLG1, POLC2) vorgesehen ist, der die Polarisationen der Übertragungssignale (DPS1, DPS2) orthogonal zueinander einstellt, und einem Polarisations-Multiplexer (PCOM) die polarisierten Übertragungssignale (DPS1, DPS2) zugeführt werden, der sie zu einem Polarisation-Multiplexsignal (PMS) zusammenfasst,
**dadurch gekennzeichnet,**
**dass** als zweiter Phasenmodulator (MOD2) ein π/2-Phasenmodulator (MOD2) angeordnet ist, der das Trägersignal (FT) derart moduliert, dass aufeinanderfolgende Modulationsabschnitte des zweiten Übertragungssignals (DPS2) um einen Phasenunterschied von ±90˚ gegenüber den vorangegangenen Modulationsabschnitten variieren.

4. Anordnung nach Anspruch 3,
**dadurch gekennzeichnet,**
**dass** der π/2-Phasenmodulator (MOD2) einen ersten Splitter (SP1) aufweist, der das Trägersignal (TF) auf zwei Signalzweige (ZM1, ZM2) aufspaltet,
**dass** dem ersten Signalzweig (ZM1) einen ersten Phasenmodulator (MOD1) aufweist und der zweite Signalzweig (ZM2)
einen zweiten Phasenmodulator (MOD2) aufweist, die abwechselnd bitweise aktiviert werden und phasenmodulierte Signale erzeugen, dass mindestens in einem Signalzweig (ZM1) ein Phasen-Stellglied (DL1, DL2) angeordnet ist, das die Phasenzustände des Trägersignals (TF) zwischen dem ersten und dem zweiten Signalzweig um 90˚ ändert, und
**dass** beide Signalzweige ausgangsseitig mit Eingängen eines Combiners (SP2) verbunden sind, der die phasenmodulierten Signale zum zweiten Übertragungssignal (DSP2) zusammenfasst.

5. Anordnung zum Empfang von optischen Datensignalen (DS1, DS2), die mittels binärer differentieller Phasenmodulation im Polarisation-Multiplexverfahrens übertragen und in Phasendemodulatoren (DEM1, DEM2) in elektrische Datensignale (DS1, DS2) rückumgesetzt werden,
**dadurch gekennzeichnet,**
**dass** durch einen optischen Splitter (SP) das empfangene Polarisation-Multiplexsignal (PMS) in zwei POLMUX-Teilsignale (TS1, TS2) aufgeteilt wird,
**dass** einem DBPSK-Demodulator (DEM1) das erster POLMUX-Teilsignal (TS1) zugeführt wird, der es in des erste Datensignal (DS1) rückumsetzt, und einem π/2-DBPSK-Demodulator (DEM2) das zweite POLMUX-Teilsignal (TS2) zugeführt wird, der es in das zweite Datensignal (DS2) rückumsetzt,
**dass** der π/2-DBPSK-Demodulator (DEM22) eine Interferometerstruktur mit zwei Signalzweigen (ZD1, ZD2) aufweist, wobei mindestens in einem Signalzweig (ZD1) ein Phasen-Stellglied (PE) angeordnet ist, durch das ein sendeseitig π/2-DBPSK moduliertes Übertragungssignal (DS2) in ein konventionell DBPSK moduliertes Signal umgesetzt wird.

6. Anordnung nach Anspruch 5,
**dadurch gekennzeichnet,**
**dass** "balanced" DBPSK-Demodulatoren (DEM1, DEM2) mit zwei Signalzweigen (ZD1, ZD2) und symmetrischen Ausgängen vorgesehen sind.

7. Anordnung nach Anspruch 6,
**dadurch gekennzeichnet,**
**dass** in einem Signalzweig (ZD1) des π/2-DBPSK-Demodulators (DEM2) ein Phasen-Stellglied (PE2) angeordnet ist, das eine Phasendrehung um n/2 bewirkt oder in beiden Signalzweigen (ZD1, ZD2) Phasen-Stellglieder (DL1, DL2) angeordnet sind, die insgesamt eine Phasendrehung um n/2 bewirken.

8. Anordnung nach Anspruch 6,
**dadurch gekennzeichnet,**
**dass** in einem Signalzweig (ZD1) der Demodulatoren (DEM1, DEM2) ein geregeltes Phasen-Stellglied (PE) angeordnet ist.

**Claims**

1. Method for the optical transmission of data signals (DS1, DS2) by means of differential binary phase modulation in a polarization multiplex method,

wherein an optical carrier signal (TF) is modulated with differential binary phase shift keying (DBPSK) with a first data signal (DS1) at the transmitting end and generated as first polarized transmission signal (DPS1) with two phase states different by 180˚ and with a first polarization,

the optical carrier signal (TF) is DBPSK-modulated with a second data signal (DS2) and sent out as a second polarized transmission signal (DPS2) with a polarization which is orthogonal to the first transmission signal (DPS1), the odd-numbered modulation sections (B1, B3, B5, ...) of which are transmitted as two phase states (0˚; 180˚) different by 180˚ and the even-numbered modulation sections (B2, B4, B6, ...) of which are also generated as phase states (90˚; 270˚) which are different by 180˚ but which have a ±90˚ phase shift with respect to the odd-numbered bits,

the transmission signals (DPS1, DPS2) are combined to form a polarization multiplex signal (PMS) and transmitted,

the polarization multiplex signal (PMS) is divided into a first and a second POLMUX part-signal (TS1, TS2) by an optical splitter at the receiving end,

the first POLMUX part-signal (TS1) is demodulated in a DBPSK demodulator (DEM1), and

the second POLMUX part-signal (TS2) is demodulated in a n/2-DBPSK demodulator (DEM2) having a phase shifting element (PE; DL1, DL2).

2. Method according to Claim 1, **characterized**
**in that** the POLMUX part-signals (TS1, TS2) are demodulated by a first DBPSK demodulator and an π2-DBPSK demodulator with balanced outputs.

3. Arrangement for the optical transmission of data signals (DS1, DS2) by means of differential binary phase modulation in the polarization multiplex method,

in which a carrier signal (FT) and first data signal (DS1) are supplied at the transmitting end to a phase modulator (MOD1) which generates a first DBPSK-modulated (differential binary phase shift keying) transmission signal (DPS1) with two phase states differing by 180˚,

the optical carrier signal (FT) and a second data signal (DS2) are supplied to a second phase modulator (MOD2) which generates a second DBPSK-modulated transmission signal (DPS2), at least one polarization controller (POLC1, POLC2) is provided which adjusts the polarizations of the transmission signals (DPS1, DPS2) orthogonally to one another, and

the polarized transmission signals (DPS1, DPS2) are supplied to a polarization multiplexer (PCOM) which combines them to form a polarization multiplex signal (PMS),

**characterized in that** as a second phase modulator (MOD2), a Π/2 phase modulator (MOD2) is arranged which modulates the carrier signal (FT) in such a manner that successive modulation sections of the second transmission signal (DPS2) vary by a phase difference of ±90˚ with respect to the preceding modulation sections.

4. Arrangement according to Claim 3, **characterized**
**in that** the Π/2 phase modulator (MOD2) has a first splitter (SP1) which splits the carrier signal (TF) onto two signal branches (ZM1, ZM2),

**in that** the first signal branch (ZM1) has a first phase modulator (MOD1) and the second signal branch (ZM2) has a second phase modulator (MOD2) which are alternately activated bit by bit and generate phase-modulated signals,

**in that**, at least in one signal branch (ZM1), a phase shifting element (DL1, DL2) is arranged which changes the phase states of the carrier signal (TF) by 90˚ between the first and the second signal branch, and

**in that** both signal branches are connected at the output end to inputs of a combiner (SP2) which combines the phase-modulated signals to form the second transmission signal (DSP2).

5. Arrangement for the reception of optical data signals (DS1, DS2) which are transmitted by means of differential binary phase modulation in the polarization multiplex method and are reconverted into electrical data signals (DS1, DS2) in phase demodulators (DEM1, DEM2), **characterized**
**in that** the received polarization multiplex signal (PMS) is divided into two POLMUX part-signals (TS1, TS2) by an optical splitter (SP),

**in that** the first POLMUX part-signal (TS1) is supplied to a DBPSK demodulator (DEM1) which reconverts it into the first data signal (DS1), and the second POLMUX part-signal (TS2) is supplied to a n/2-DBPSK demodulator (DEM2) which reconverts it into the second data signal (DS2),

**in that** the n/2-DBPSK demodulator (DEM2) has an interferometer structure comprising two signal branches (ZD1, ZD2), wherein at least in one signal branch (ZD1), a phase shifting element (PE) is arranged by means of which a transmission signal (DS2), n/2-DBPSK modulated at the transmitting end, is converted into a conventionally DBPSK-modulated signal.

6. Arrangement according to Claim 5, **characterized in that** balanced DBPSK demodulators (DEM1, DEM2) having two signal branches (ZD1, ZD2) and balanced outputs are provided.

7. Arrangement according to Claim 6, **characterized in that** in one signal branch (ZD1) of the $\Pi/2$-DBPSK demodulator (DEM2), a phase shifting element (PE2) is arranged which effects a phase rotation by n/2, or in both signal branches (ZD1, ZD2), phase shifting elements (DL1, DL2) are arranged which together effect a phase rotation by n/2.

8. Arrangement according to Claim 6, **characterized in that** a regulated phase shifting element (PE) is arranged in one signal branch (ZD1) of the demodulators (DEM1, DEM2).

**Revendications**

1. Procédé de transmission optique de signaux de données (DS1, DS2) au moyen d'une modulation de phase binaire différentielle dans un procédé de multiplexage de polarisation,
dans lequel, côté émission, un signal porteur optique (TF) est modulé en phase différentielle de manière binaire DBPSK avec un premier signal de données (DS1) et est généré, en tant que premier signal de transmission polarisé (DPS1), avec deux états de phase différents de 180° et avec une première polarisation,
dans lequel le signal porteur optique (TF) est modulé DBPSK avec un second signal de données (DS2) et est émis, en tant que second signal de transmission polarisé (DPS2), avec une polarisation orthogonale par rapport au premier signal de transmission (DPS1), dont les sections de modulation impaires (B1, B3, B5, ...) sont transmises comme deux états de phase (0° ; 180°) différents de 180° et dont les sections de modulation paires (B2, B2, B3, ...) sont également générées comme états de phase (90° ; 270°) différents de 180°, qui, par rapport aux bits impairs, présentent cependant un déphasage de $\pm 90°$,
dans lequel les signaux de transmission (DPS1, DPS2) sont réunis et transmis en un signal multiplex de polarisation (PMS),
dans lequel, côté réception, le signal multiplex de polarisation (PMS) est divisé en un premier et en un second signal partiel POLMUX (TS1, TS2) par un séparateur optique,
dans lequel le premier signal partiel POLMUX (TS1) est démodulé dans un démodulateur DBPSK (DEM1), et le second signal partiel POLMUX (TS2) est démodulé dans un démodulateur DBPSK $\Pi/2$ (DEM2) présentant un organe de réglage de phase (PE ; DL1, DL2).

2. Procédé selon la revendication 1,
**caractérisé en ce que** la démodulation des signaux partiels POLMUX (TS1, TS2) est réalisée au moyen d'un premier démodulateur DBPSK et d'un démodulateur DBPSK $\Pi/2$ à sorties symétriques.

3. Dispositif de transmission optique de signaux de données (DS1, DS2) au moyen d'une modulation de phase différentielle binaire dans le procédé de multiplexage de polarisation,
dans lequel, côté émission, un signal porteur (FT) et un premier signal de données (DS1) sont amenés à un modulateur de phase (MODL) qui génère un premier signal de transmission (DPS1) modulé en phase différentielle de manière binaire DBPSK avec deux états de phase différents de 180°,
dans lequel le signal porteur optique (FT) et un second signal de données (DS2) sont amenés à un second modulateur de phase (MOD2) qui génère un second signal de transmission (DPS2) modulé DBPSK,
dans lequel au moins un organe de réglage de polarisation (POLC1, POLC2) est prévu, qui règle les polarisations des signaux de transmission (DPS1, DPS2) de manière orthogonale l'une par rapport à l'autre, et
dans lequel les signaux de transmission polarisés (DPS1, DPS2) sont amenés à un multiplexeur de polarisation (PCOM) qui les regroupe en un signal multiplex de polarisation (PMS),
**caractérisé en ce qu'**un modulateur de phase $\Pi/2$ (MOD2) est disposé en tant que second modulateur de phase (MOD2), qui module le signal porteur (FT) de manière à ce que des sections de modulation successives du second signal de transmission (DPS2) varient d'une différence de phase de $\pm 90°$ par rapport aux sections de modulation précédentes.

**4.** Dispositif selon la revendication 3,
**Caractérisé**
**en ce que** le modulateur de phase Π/2 (MOD2) présente un premier séparateur (SP1) qui sépare le signal porteur (TF) en deux branches de signal (ZM1, ZM2),
**en ce que** la première branche de signal (ZM1) présente un premier modulateur de phase (MOD1) et en ce que la seconde branche de signal (ZM2) présente un second modulateur de phase (MOD2), qui sont activés en alternance par bits et génèrent des signaux modulés en phase,
**en ce qu'**un organe de réglage de phase (DL1, DL2) est disposé dans au moins une branche de signal (ZM1), lequel modifie les états de phase du signal porteur (TF) de 90˚ entre la première et la seconde branches de signal, et
**en ce que** les deux branches de signal sont raccordées côté sortie à des entrées d'un combineur (SP2) qui regroupe les signaux modulés en phase vers le second signal de transmission (DSP2).

**5.** Dispositif de réception de signaux de données optiques (DS1, DS2) qui sont transmis au moyen d'une modulation de phase différentielle binaire dans le procédé de multiplexage de polarisation et sont convertis en retour en signaux de données électriques (DS1, DS2) dans des démodulateurs de phase (DEM1, DEM2),
**caractérisé en ce**
**que** le signal multiplex de polarisation reçu (PMS) est divisé en deux signaux partiels POLMUX (TS1, TS2) par un séparateur optique (SP),
en ce que le premier signal partiel POLMUX (TS1) est amené à un démodulateur DBPSK qui le convertit en retour en premier signal de données (DS1), et en ce que le second signal partiel POLMUX (TS2) est amené à un démodulateur DBPSK Π/2 (DEM2)qui le convertit en retour en second signal de données (DS2),
en ce que le démodulateur DBPSK Π/2 (DEM2) présente une structure d'interféromètre avec deux branches de signal (ZD1, ZD2), un organe de réglage de phase (PE) étant disposé dans au moins une branche de signal (ZD1), au moyen duquel un signal de transmission modulé DBPSK Π/2 (DS2) côté émission est converti en un signal modulé DBPSK de manière conventionnelle.

**6.** Dispositif selon la revendication 5,
**caractérisé en ce**
**que** des démodulateurs DBPSK « balanced » (DEM1, DEM2) comprenant deux branches de signal (ZD1, ZD2) et des sorties symétriques sont prévus.

**7.** Dispositif selon la revendication 6,
**caractérisé en ce**
**qu'**un organe de réglage de phase (PE2) est disposé dans une branche de signal (ZD1) du démodulateur DBPSK Π/2 (DEM2), lequel organe de réglage cause une rotation de phase de Π/2 ou en ce que des organes de commande de phase (DL1, DL2) sont disposés dans les deux branches de signal (ZD1, ZD2), ces organes de réglage causant en tout une rotation de phase de Π/2.

**8.** Dispositif selon la revendication 6,
**caractérisé en ce**
**qu'**un organe de réglage de phase régulé (PE) est disposé dans une branche de signal (ZD1) des démodulateurs (DEM1, DEM2).

## FIG 1

## FIG 2

## FIG 3

DS2 → ⊗ → MOD [×] → PHM [× [−π/4; π/4]] → DPS2

DL

US

## FIG 4

LA → FT → SP1

MOD1 → DL1 [+π/4] → DPS1

±π/2

MOD2 → DL2 [−π/4] → DPS2

SP2

PCOM [+] → PMS

EC

DS2 → OS → IN

US

±π/2

# FIG 5

# FIG 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10243141 A1

**In der Beschreibung aufgeführte Nicht-Patentliteratur**

- Secure optical communicationutilizing PSK modulation, wavelength and polarisation agility. *IEEE MILITARY COMMUNICATIONS CONFERENCE, MILCOM 2003,* 13. Oktober 2003

- **VON JIN WANG.** Conventional DPSK Versus Symmetrical DPSK: Comparision of Dispersion Tolerances. *IEEE PHotonics Technology Letters,* Juni 2004, vol. 16 (6), 1585-1587